# EUROPÄISCHE PATENTSCHRIFT

(11) **EP 2 943 276 B1**
(45) Veröffentlichungstag und Bekanntmachung des Hinweises auf die Patenterteilung: **21.07.2021**
(21) Anmeldenummer: 14700220.8
(22) Anmeldetag: 06.01.2014
(51) Int. Cl.: B01J 35/00

(54) **KATALYSATOR ZUR REDUKTION VON STICKOXIDEN**
CATALYST FOR REDUCING NITROGEN OXIDES
CATALYSEUR PERMETTANT DE RÉDUIRE LES DIOXYDES D'AZOTE

(30) Priorität: 08.01.2013 EP 13150457
(43) Veröffentlichungstag der Anmeldung: 18.11.2015
(73) Patentinhaber: Umicore AG & Co. KG, 63457 Hanau-Wolfgang (DE)
(72) Erfinder: HOYER, Ruediger, 63755 Alzenau (DE); SCHULER, Anke, 63843 Niedernberg (DE); MUELLER, Elena, 64319 Pfungstadt (DE); UTSCHIG, Thomas, 60598 Frankfurt am Main (DE); JESKE, Gerald, 63543 Neuberg (DE)
(86) Internationale Anmeldenummer: PCT/EP2014/050076
(87) Internationale Veröffentlichungsnummer: WO 2014/108362

(56) Entgegenhaltungen:
- WO-A1-2010/097146
- WO-A1-2012/029050
- WO-A1-2012/029050

## Beschreibung

Die vorliegende Erfindung betrifft einen Katalysator zur Reduktion von Stickoxiden, das im Abgas mager betriebener Verbrennungsmotoren enthalten ist.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die ebenfalls überwiegend gasförmig vorliegen, Partikelemissionen, auch als "Dieselruß" oder "Russpartikel" bezeichnet. Dabei handelt es sich um komplexe Agglomerate aus überwiegend Kohlenstoff-haltigen Feststoff-Teilchen und einer anhaftenden Flüssigphase, die mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Zur Entfernung der Stickoxide sind sogenannte Stickoxid-Speicherkatalysatoren, für die auch der Begriff "Lean NOx Trap" oder LNT üblich ist, bekannt. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.

Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu NO₂, sowie CO und HC zu CO₂ zu oxidieren und andererseits während der fetten Betriebsphasen, in denen der Stickoxid-Speicherkatalysator regeneriert wird, freigesetztes NO₂ zu Stickstoff zu reduzieren.

Mit der Veränderung der Abgasgesetzgebung nach Euro 6 werden zukünftige Abgassysteme sowohl bei kalten Temperaturen im Stadtzyklus, als auch bei hohen Temperaturen, wie sie bei hohen Lasten auftreten, ausreichende NOₓ-Konvertierung aufweisen müssen. Bekannte Stickoxid-Speicherkatalysatoren zeigen aber entweder eine ausgeprägte NOₓ-Speicherung bei niedrigen oder bei hohen Temperaturen. Eine NOₓ-Konvertierung > 60% bei Temperaturen von 200 bis 450°C, die zur Erfüllung künftiger Abgasgesetzgebung unerlässlich ist, kann bisher nicht erreicht werden.

Die EP 0 885 650 A2 beschreibt einen Abgasreinigungskatalysator für Verbrennungsmotoren mit zwei katalytisch aktiven Schichten auf einem Tragkörper. Die auf dem Tragkörper befindliche Schicht umfasst ein oder mehrere hochdisperse Erdalkalioxide, mindestens ein Platingruppenmetall, sowie wenigstens ein feinteiliges, Sauerstoff speicherndes Material. Dabei stehen die Platingruppenmetalle mit allen Bestandteilen dieser ersten Schicht in enger Berührung. Die zweite Schicht steht mit dem Abgas in direktem Kontakt und enthält mindestens ein Platingruppenmetall, sowie wenigstens ein feinteiliges, Sauerstoff speicherndes Material. Nur ein Teil der feinteiligen Feststoffe der zweiten Schicht dient als Träger für die Platingruppenmetalle.

Aus der US2009/320457 ist ein Stickoxid-Speicherkatalysator bekannt, der zwei übereinander liegende Katalysatorschichten auf einem Trägersubstrat umfasst. Die untere, direkt auf dem Trägersubstrat liegende Schicht umfasst ein oder mehrere Edelmetalle, sowie ein oder mehrere Stickoxid-Speicherkomponenten. Die obere Schicht umfasst ein oder mehrere Edelmetalle, sowie Ceroxid und ist frei von Alkali- oder Erdalkalikomponenten.

Auch aus der WO2010/097146 A1 ist ein Stickoxid-Speicherkatalysator bekannt, der zwei übereinander liegende Katalysatorschichten auf einem Trägersubstrat umfasst. Die untere, direkt auf dem Trägersubstrat liegende Schicht umfasst Platin aufgebracht auf einem homogenen Magnesium-Aluminium-Mischoxid. Die darauf aufgebrachte obere Schicht enthält Palladium auf Aluminiumoxid und Bariumoxid oder Strontiumoxid, aberkein Platin.

Katalysatorsubstrate, die Stickoxid-Speichermaterialien enthalten und zwei oder mehr Schichten aufweisen, sind auch in der WO 2012/029050 beschrieben. Die erste Schicht befindet sich direkt auf dem Trägersubstrat und umfasst Platin und/oder Palladium, während sich die zweite Schicht auf der ersten befindet und Platin umfasst. Beide Schichten enthalten außerdem ein oder mehrere Sauerstoffspeichermaterialien und ein oder mehrere Stickoxid-Speichermaterialien, die ein oder mehrere Alkali- und/oder Erdalkalimetalle umfassen. Die Gesamtmenge an Alkali- und Erdalkalimetall in den Stickoxid-Speichermaterialien beträgt 0,18 bis 2,5 g/in³, berechnet als Alkalimetalloxid M₂O und Erdalkalimetalloxid MO.

Die vorliegende Erfindung betrifft einen Stickoxid-Speicherkatalysator aus mindestens zwei katalytisch aktiven Beschichtungen auf einem Tragköper, wobei
- eine untere Beschichtung A Ceroxid, sowie Platin und/oder Palladium und keine Erdalkaliverbindung enthält und
- eine obere Beschichtung B, die über der Beschichtung A angeordnet ist, eine Erdalkaliverbindung, ein basisches Magnesium-Aluminium-Mischoxid, sowie Platin und Palladium enthält,
wobei sie als Erdalkaliverbindung Bariumoxid oder Strontiumoxid enthält.

Das in der unteren Beschichtung A eingesetzte Ceroxid kann handelsüblicher Qualität sein, d.h. einen Ceroxid-Anteil von 90 bis 100 Gew.% aufweisen.
In einer Ausführungsform der vorliegenden Erfindung wird Ceroxid in einer Menge von 30 bis 100 g/l, insbesondere 30 bis 80 g/l, eingesetzt.

Die untere Beschichtung A kann Platin oder Palladium enthalten, in bevorzugten Ausführungsformen der vorliegenden Erfindung enthält sie aber Platin und Palladium. Dabei liegt das Pt:Pd-Verhältnis im Bereich von 1:2 bis 10:1, insbesondere 1:1 bis 4:1, beispielsweise 1:1, 2:1 und 4:1.

In weiteren Ausführungsformen der vorliegenden Erfindung enthält die untere Beschichtung A Rhodium als weitere Edelmetallkomponente. Die verwendeten Rhodium-Mengen liegen beispielsweise bei 1 bis 10 g/cft (0,035 bis 0,35 g/l).

In Ausführungsformen der vorliegenden Erfindung enthält die untere Beschichtung A nicht nur keine Erdalkaliverbindung, sondern auch kein Stickoxid-Speichermaterial, insbesondere keine Alkaliverbindung.
Die Begriffe "keine Erdalkaliverbindung", "kein Stickoxid-Speichermaterial" und "keine Alkaliverbindung" bedeuten im Rahmen der vorliegenden Erfindung nicht, dass die untere Beschichtung A absolut frei von den genannten Komponenten ist. Vielmehr können sie herstellungsbedingt, in Form von Verunreinigungen oder auch durch Wanderung aus der oberen Schicht B in geringen Mengen enthalten sein. Diese Mengen überschreiten aber 2 Gew.-% bezogen auf das Gesamtgewicht der Beschichtung A nicht.

Die Erdalkaliverbindung in der oberen Beschichtung B liegt in Ausführungsformen der vorliegenden Erfindung in Mengen von 10 bis 50 g/l, besonders 15 bis 20 g/l, berechnet als Erdalkalioxid, vor.

Im Rahmen der vorliegenden Erfindung bedeutet der Begriff Magnesium-Aluminium-Mischoxid, dass Magnesium und Aluminium eine Mischung auf atomarer Ebene bilden. Der Begriff schließt physikalische Mischungen von Magnesiumoxid und Aluminiumoxid aus. Somit ist die Zusammensetzung der erfindungsgemäß eingesetzten basischen Magnesium-Aluminium-Mischoxide im Rahmen der Messgenauigkeit über den Querschnitt eines Pulverkorns konstant, das heißt homogen.

In Ausführungsformen der vorliegenden Erfindung werden basische Magnesium-Aluminium-Mischoxide verwendet, bei denen das Magnesiumoxid in einer Konzentration von 1 bis 40 Gew.-%, insbesondere von 5 bis 28,4 Gew.-%, bevorzugt von 15 bis 25 Gew.-%, bezogen auf das Gesamtgewicht des Mischoxids, vorliegt.

In Ausführungsformen der vorliegenden Erfindung liegt das basische Magnesium-Aluminium-Mischoxid in Mengen von 50 bis 170 g/l, insbesondere 100 bis 150 g/l, vor.

Die obere Beschichtung B enthält Platin und Palladium, wobei das Verhältnis Pt: Pd im Bereich von 1:1 bis 14:1, insbesondere 4:1 bis 12:1, beispielsweise 4:1, 6:1, 8:1, 10:1 und 12:1, liegt.

Sowohl in der unteren Beschichtung A, als auch in der oberen Beschichtung B liegt das Edelmetall üblicherweise auf geeigneten Trägermaterialien vor. Als solche werden hochoberflächige, hochschmelzende Oxide verwendet, beispielsweise Aluminiumoxid, Siliziumdioxid, Titandioxid, aber auch Mischoxide wie beispielsweise Cer-Zirkon-Mischoxide.
In Ausführungsformen der vorliegenden Erfindung wird als Trägermaterial für die Edelmetalle Aluminiumoxid verwendet, insbesondere solches, das durch 1 bis 6 Gew.%, insbesondere 4 Gew.-%, Lanthanoxid stabilisiert ist. Darüberhinaus können in der oberen Beschichtung B Platin und Palladium ganz oder teilweise auf dem basischen Magnesium-Aluminium-Mischoxid geträgert vorliegen.
In einer weiteren Ausführungsform der vorliegenden Erfindung enthält die obere Beschichtung B Ceroxid, insbesondere in einer Menge von 50 bis 100 g/l.

In einer bevorzugten Ausführungsform betrifft die vorliegende Erfindung einen Stickoxid-Speicherkatalysator aus mindestens zwei katalytisch aktiven Beschichtungen auf einem Tragköper,
wobei
- eine untere Beschichtung A
   ∘ Ceroxid in einer Menge von 30 bis 80 g/l,
   ∘ Platin und Palladium im Verhältnis 2:1, sowie
   ∘ Rhodium; enthält und
- eine obere Beschichtung B über der unteren Beschichtung A angeordnet ist und
   ∘ Bariumoxid in einer Menge von 15 bis 35 g/l,
   ∘ ein basisches Magnesium-Aluminium-Mischoxid mit einem Magnesium-Anteil von 15 bis 25 Gew.-%, bezogen auf das Magnesium-Aluminium-Mischoxid, in einer Menge von 50 bis 150 g/l,
   ∘ Platin und Palladium im Verhältnis 10:1, sowie
   ∘ Ceroxid in einer Menge von 50 bis 100 g/l
      enthält.

In einer weiteren bevorzugten Ausführungsform betrifft die vorliegende Erfindung einen Stickoxid-Speicherkatalysator aus mindestens zwei katalytisch aktiven Beschichtungen auf einem Tragköper, wobei
- eine untere Beschichtung A aus
   ∘ Ceroxid in einer Menge von 30 bis 80 g/l,
   ∘ Platin und Palladium im Verhältnis 2:1, sowie
   ∘ Rhodium; besteht und
- eine obere Beschichtung B über der unteren Beschichtung angeordnet ist und aus
   ∘ Bariumoxid in einer Menge von 15 bis 35 g/l,
   ∘ ein basisches Magnesium-Aluminium-Mischoxid mit einem Magnesium-Anteil von 15 bis 25 Gew.-%, bezogen auf das Magnesium-Aluminium-Mischoxid, in einer Menge von 50 bis 150 g/l, ∘ Platin und Palladium im Verhältnis 10:1, sowie
   ∘ Ceroxid in einer Menge von 50 bis 100 g/l
besteht.

Der Stickoxid-Speicherkatalysator der vorliegenden Erfindung umfasst in einer weiteren Ausführungsform eine dritte Beschichtung C, die zwischen dem Tragkörper und der unteren Beschichtung A angeordnet ist und die eine Erdalkaliverbindung, ein basisches Magnesium-Aluminium-Mischoxid, sowie Platin und Palladium enthält. Was Ausgestaltungen dieser dritten Beschichtung C betrifft, so wird auf die oben stehenden Ausführungen bezüglich der oberen Beschichtung B verwiesen. In der Tat kann die dritte Beschichtung C mit der oberen Beschichtung B identisch sein.
Als Tragkörper kommen erfindungsgemäß insbesondere Durchflusssubstrate aus Metall und insbesondere aus keramischen Materialien in Frage. Insbesondere bestehen sie aus Cordierit, aus Siliciumcarbid, aus Mullit oder aus Aluminiumtitanat. Solche Substrate sind in der Literatur zahlreich beschrieben und im Handel erhältlich.

Die Aufbringung der katalytisch aktiven Beschichtungen A und B und gegebenenfalls C auf den Tragkörper erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.

Die erfindungsgemäßen Stickoxid-Speicherkatalysatoren eignen sich in hervorragender Weise zur Konvertierung von NOₓ in Abgasen von Kraftfahrzeugen, die mit mager betriebenen Motoren, etwa Dieselmotoren, betrieben werden. Sie erreichen eine NOx-Konvertierung > 60 % bei Temperaturen von circa 200 bis 500°C und sind somit für Euro 6 Anwendungen geeignet.
Die vorliegende Erfindung betrifft somit auch ein Verfahren zur Konvertierung von NOₓ in Abgasen von Kraftfahrzeugen, die mit mager betriebenen Motoren, etwa Dieselmotoren, betrieben werden, das dadurch gekennzeichnet ist, dass das Abgas über einen Stickoxid-Speicherkatalysator aus mindestens zwei katalytisch aktiven Beschichtungen auf einem Tragköper geleitet wird,
wobei
- eine untere Beschichtung A Ceroxid, sowie Platin und/oder Palladium und keine Erdalkaliverbindung enthält und
- eine obere Beschichtung B, die über der Beschichtung A angeordnet ist, eine Erdalkaliverbindung, ein basisches Magnesium-Aluminium-Mischoxid, sowie Platin und Palladium enthält,
wobei sie als Erdalkaliverbindung Bariumoxid oder Strontiumoxid enthält.

Ausgestaltungen des erfindungsgemäßen Verfahrens hinsichtlich des Stickoxid-Speicherkatalysators entsprechen den oben stehenden Beschreibungen.

Die Erfindung wird in den nachstehenden Beispielen und Figuren näher erläutert.
Figur 1: NOx-Konvertierung der Katalysatoren K1, VK1 und VK2 bei 420°C in Abhängigkeit von der sogenannten "fuel penalty"
Figur 2: NOx-Konvertierung der Katalysatoren K1, VK1 und VK2 in Abhängigkeit von der Temperatur in magerer (a) und fetter (b) Betriebsphase.
Figur 3: HCx-Konvertierung der Katalysatoren K1, VK1 und VK2 in Abhängigkeit von der Temperatur in magerer Betriebsphase.
Figur 4: NOx-Konvertierung der Katalysatoren K2 und VK3 in Abhängigkeit von der Temperatur in fett/magerer Betriebsphase.
Figur 5: HC-Konvertierung der Katalysatoren K2 und VK3 in Abhängigkeit von der Temperatur in magerer Betriebsphase.
Figur 6: NOx-Konvertierung der Katalysatoren K2 und VK4 in Abhängigkeit von der Temperatur in fett/magerer Betriebsphase.

### Beispiel 1

Zur Herstellung eines erfindungsgemäßen Katalysators wird ein wabenförmiger Keramikträger mit einer ersten Washcoatschicht A beschichtet, die Pt, Pd und Rh geträgert auf einem Lanthan-stabilisiertem Alumina, sowie Ceroxid in einer Menge von 55 g/l enthält. Die Beladung von Pt, Pd und Rh beträgt dabei 20 g/cft (0,70 g/l), 10 g/cft (0,35 g/l) und 5 g/cft (0,175 g/l) und die Gesamtbeladung der Washcoatschicht 98 g/l bezogen auf das Volumen des Keramik-Trägers. Auf die erste Washcoatschicht wird eine weitere Washcoatschicht B aufgebracht, die ebenfalls Pt und Pd geträgert auf einem Lanthan-stabilisiertem Alumina enthält. Desweiteren enthält die Washcoatschicht 31 g/l BaO geträgert auf einem Magnesium-Aluminium-Mischoxid und einer weiteren Ceroxid-Komponente. Die Beladung von Pt und Pd in dieser Washcoatschicht beträgt 60 g/cft (2,1 g/l) bzw. 6 g/cft (0,21 g/l), während die Gesamt-Washcoatbeladung 258 g/l beträgt.
Der so erhaltene Katalysator wird nachstehend K1 genannt.

### Vergleichsbeispiel 1

Vergleichsbeispiel 1 unterscheidet sich von Beispiel 1 dadurch, dass die Washcoatschichten A und B hinsichtlich ihrer Reihenfolge auf dem wabenförmigen Keramikträger vertauscht sind. Washcoatschicht B aus Beispiel 1 ist somit direkt auf den Keramikträger aufgebracht und trägt Washcoatschicht A aus Beispiel 1. Der so erhaltene Katalysator wird nachstehend VK1 genannt.

### Vergleichsbeispiel 2

Vergleichsbeispiel 2 unterscheidet sich von Beispiel 1 dadurch, dass der erste und der zweite Washcoat aus Beispiel 1 vor der Beschichtung zu einem Washcoat gemischt wurde und damit eine homogene Beschichtung auf einem wabenförmigen Keramikträger aufgebracht wurde. Der so erhaltene Katalysator wird nachstehend VK2 genannt.

Vergleich von Beispiel 1 mit Vergleichsbeispielen 1 und 2
a) Vor dem Vergleich wurden die Katalysatoren K1, VK1 und VK2 bei 800°C für 16 Stunden in hydrothermaler Atmosphäre gealtert.
b) In EP 2 402 571 A1 wird gezeigt, dass bei hoch-frequenter HC-Eindosierung mittels Injektor vor den Katalysator hohe NOx-Konvertierungen erzielt werden können, die unter Standard-NOx-Speicherbedingungen so nicht zu erzielen sind. Damit kann ein NOx-Speicherkatalysator auch unter hohen Lasten noch sinnvoll betrieben werden. Zum Vergleich der Katalysatoren K1, VK1 und VK2 wurde dieses Verfahren herangezogen, wobei ein Motorprüfstand mit einem 2,01 TDI Dieselmotor verwendet wurde.
   Dabei wurde der Motor in einem konstanten Betriebspunkt mit 2000 1/min Umdrehungen und einem Drehmoment von 250 nm betrieben. Die Abgastemperatur, die über die Katalysatoren geleitet wurde, betrug dabei 420°C. Zur Reduktion der Stickoxide wurde dabei alle 3 Sekunden mit einem Injektor Dieselkraftstoff direkt vor den Katalysator injektiert. Die Injektionsdauer lag dabei im Bereich von 10-20ms.

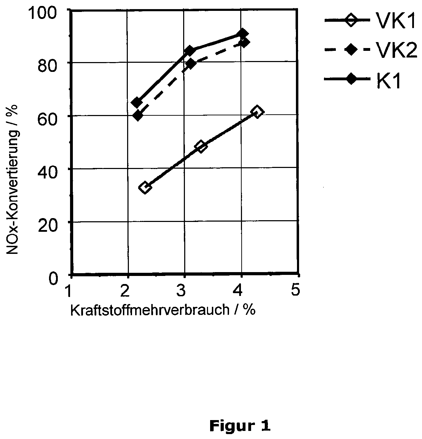

   In Figur 1 ist die NOx-Konvertierung in Abhängigkeit der zusätzlich zum Kraftstoffverbrauch des Motors eindosierten Dieselkraftstoffmenge (fuel penalty) aufgetragen. Dabei ist zu erkennen, dass der erfindungsgemäße Katalysator K1 mit einer Ba-haltigen oberen Washcoatschicht die höchste Konvertierung zeigt, während Vergleichskatalysator VK1 mit umgedrehtem Schichtaufbau, eine deutlich geringere Konvertierung aufweist. Der homogene Katalysator VK2 zeigt eine Konvertierung, die zwar deutlich besser ist als die von VK1, aber schlechter als die des erfindungsgemäßen Katalysators K1.

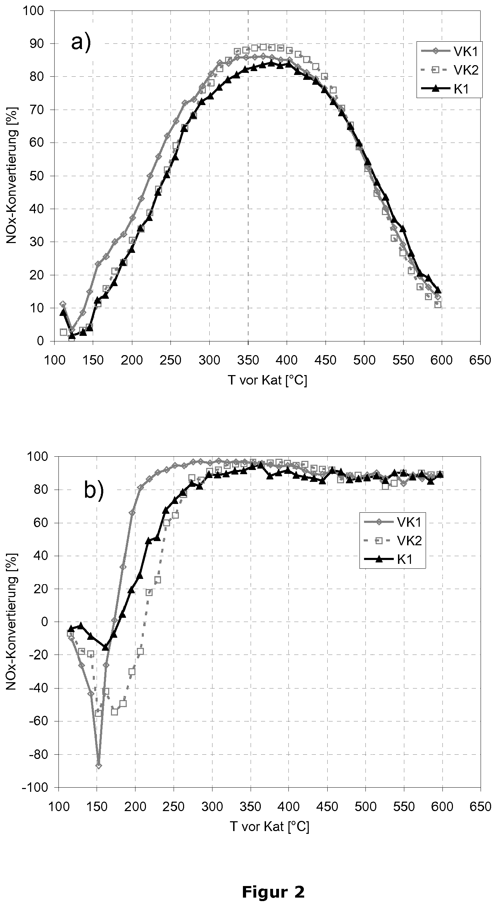

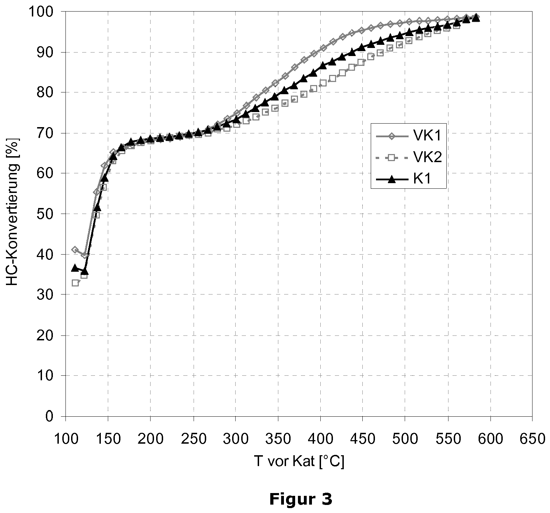

c) In Figur 2 und 3 ist die NOx-Konvertierung und HC-Konvertierung des erfindungsgemäßen Katalysators K1 und der Vergleichskatalysatoren VK1 und VK2 in Abhängigkeit von der Temperatur vor dem Katalysator in einem Modellgasreaktor gezeigt. Dabei wird, während die Temperatur von 600°C auf 150°C mit 7,5°C pro Minute abgesenkt wird, der Katalysator abwechselnd für 80s mit "magerem" Abgas und für 10s mit "fettem" Abgas beaufschlagt. Während des Testes wird konstant 500 ppm NO und 33 ppm Propen sowie 17 ppm Propan dosiert.
In Figur 2 ist die NOx-Konvertierung getrennt nach magerer Phase und fetter Phase gezeigt. Während bei Temperaturen oberhalb 400°C alle Katalysatoren unter diesen Bedingungen vergleichbare NOx-Konvertierungen zeigen, weist der Katalysator VK1 bei Temperaturen < 300°C die höchste NOx-Konvertierung aus. Dabei ist aber besonders unter "fetten" Abgasbedingungen zu erkennen, dass der erfindungsgemäße Katalysator K1 eine höhere NOx-Konvertierung aufweist, als der homogen beschichtete Katalysator VK2.
Ebenso zeigt Figur 3, dass die HC-Konvertierung am größten ist, wenn wie in Vergleichsbeispiel 1 die Ba-freie Washcoatschicht auf der Ba-haltigen unteren Washcoatschicht aufgebracht ist. Allerdings zeigen sich auch hier wieder Vorteile für die umgedrehte Schichtstruktur aus Beispiel 1 gegenüber der homogenen Katalysatorstruktur aus Vergleichsbeispiel 2.

Unter dem Gesichtspunkt, dass ein Katalysator sowohl unter kalten Abgastemperaturen, als auch bei Temperaturen oberhalb 400°C mit HC-Eindosierung sehr gut NOx konvertieren soll, weist als Gesamtergebnis der beschriebenen Versuche der erfindungsgemäße Katalysator K1 im Vergleich zu den Vergleichskatalysatoren VK1 und VK2 deutliche Vorteile auf.

### Beispiel 2

Zur Herstellung eines erfindungsgemäßen Katalysators wird ein wabenförmiger Keramikträger mit einer ersten Washcoatschicht A beschichtet, die eine Pt, Pd und Rh geträgert auf einem Lanthan-stabilisiertem Alumina, sowie Ceroxid in einer Menge von 55 g/l enthält. Die Beladung von Pt, Pd und Rh beträgt dabei 20 g/cft (0,70 g/l), 10 g/cft (0,35 g/l) und 5 g/cft (0,175 g/l) und die Gesamtbeladung der Washcoatschicht 98 g/l bezogen auf das Volumen des Keramik-Trägers. Auf die erste Washcoatschicht wird eine weitere Washcoatschicht B aufgebracht, die ebenfalls Pt und Pd geträgert auf einem Lanthan-stabilisiertem Alumina enthält. Desweiteren enthält die Washcoatschicht eine Ceroxid-Komponente sowie 21 g/l BaO geträgert auf einem Magnesium-Aluminium-Mischoxid, das zusätzlich mit Ceroxid dotiert ist..
Die Beladung von Pt und Pd in dieser Washcoatschicht beträgt 60 g/cft (2,1 g/l) bzw. 6 g/cft (0,21 g/l), während die Gesamt-Washcoatbeladung 258 g/l beträgt.
Der so erhaltene Katalysator wird nachstehend K2 genannt.

### Vergleichsbeispiel 3

Vergleichsbeispiel 3 unterscheidet sich von Beispiel 2 dadurch, dass die untere Washcoatschicht A zusätzlich 11 g/l BaO geträgert auf dem Ceroxid enthält. Der so erhaltene Katalysator wird nachstehend VK3 genannt.

### Vergleichsbeispiel 4

Vergleichsbeispiel 4 unterscheidet sich von Beispiel 2 dadurch, dass BaO auf einem mit Ceroxid-dotierten Alumina geträgert ist, während die äquivalente MgO-Menge als Acetat zur Washcoat-Suspension gegeben wurde.
Der so erhaltene Katalysator wird nachstehend VK4 genannt.

### Vergleich von Beispiel 2 mit Vergleichsbeispiel 3

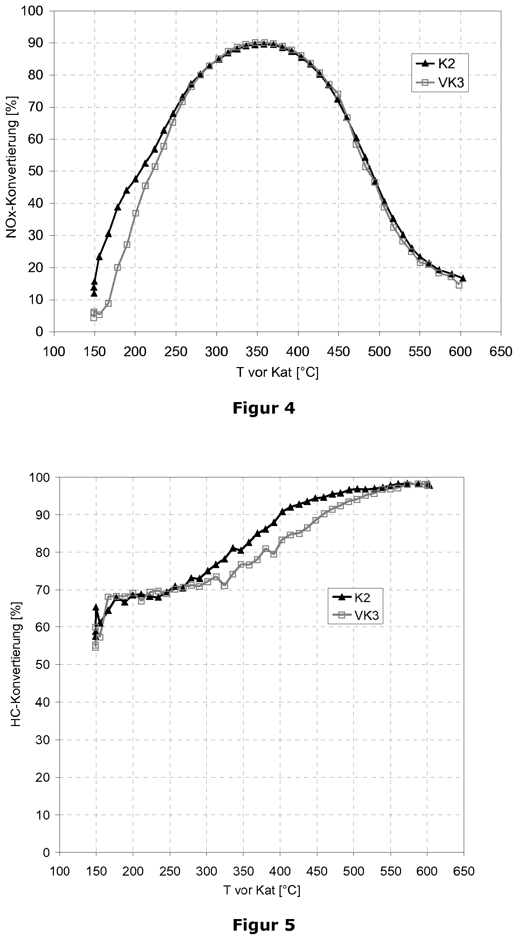

In Figur 4 und 5 ist die NOx-Konvertierung bzw. HC-Konvertierung des erfindungsgemäßen Katalysators K2 und des Vergleichskatalysators VK3 in Abhängigkeit von der Temperatur vor dem Katalysator in den gleichen Testbedingungen wie in Figur 2 und 3 gezeigt, mit dem Unterscheid, dass in Figur 4 die NOx-Konvertierung in einem "mager/fett"-Zyklus, d.h. 80s "mageres" Abgas + 10s "fettes" Abgas, aufgetragen ist.
Dabei ist in Figur 4 zu erkennen, dass der Vergleichskatalysator VK3 eine deutlich niedrigere NOx-Konvertierung bei Temperaturen < 250°C im Vergleich zum erfindungsgemäßen Katalysator K2 zeigt. Figur 5 zeigt, dass der erfindungsgemäße Katalysator K2 eine höhere HC-Konvertierung im Vergleich zu Vergleichskatalysator VK3 aufweist.

### Vergleich von Beispiel 2 mit Vergleichsbeispiel 4

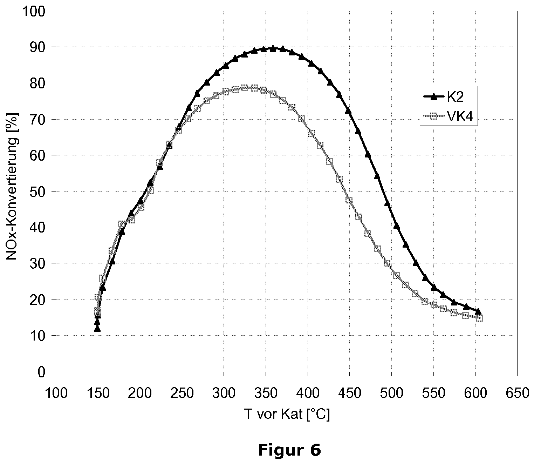

Analog zu Figur 4 ist in Figur 6 die NOx-Konvertierung des erfindungsgemäßen Katalysators K2 und des Vergleichskatalysators VK4 in Abhängigkeit von der Temperatur vor dem Katalysator gezeigt. Es ist deutlich zu erkennen, dass der erfindungsgemäße Katalysator K2 im Vergleich zu Vergleichskatalysator VK4 eine deutlich bessere NOx-Konvertierung aufweist.

## Patentansprüche

1. Stickoxid-Speicherkatalysator aus mindestens zwei katalytisch aktiven Beschichtungen auf einem Tragköper, wobei
- eine untere Beschichtung A Ceroxid, sowie Platin und/oder Palladium und keine Erdalkaliverbindung enthält und
- eine obere Beschichtung B, die über der Beschichtung A angeordnet ist, eine Erdalkaliverbindung, ein basisches Magnesium-Aluminium-Mischoxid, sowie Platin und Palladium enthält,
wobei sie als Erdalkaliverbindung Bariumoxid oder Strontiumoxid enthält.

2. Stickoxid-Speicherkatalysator nach Anspruch 1, **dadurch gekennzeichnet, dass** die untere Beschichtung A Ceroxid in einer Menge von 30 bis 100 g/l enthält.

3. Stickoxid-Speicherkatalysator nach Anspruch 1 und/oder 2, **dadurch gekennzeichnet**, die untere Beschichtung A Platin und Palladium enthält.

4. Stickoxid-Speicherkatalysator nach Anspruch 3, **dadurch gekennzeichnet, dass** das Pt:Pd-Verhältnis in der unteren Beschichtung A im Bereich von 1:2 bis 10:1 liegt.

5. Stickoxid-Speicherkatalysator nach einem oder mehreren der Ansprüche 1 bis 4, **dadurch gekennzeichnet, dass** die untere Beschichtung A Rhodium enthält.

6. Stickoxid-Speicherkatalysator nach einem oder mehreren der Ansprüche 1 bis 5, **dadurch gekennzeichnet, dass** die obere Beschichtung B Erdalkaliverbindung in Mengen von 10 bis 50 g/l enthält.

7. Stickoxid-Speicherkatalysator nach einem oder mehreren der Ansprüche 1 bis 6, **dadurch gekennzeichnet, dass** die obere Beschichtung B basisches Magnesium-Aluminium-Mischoxid enthält, wobei Magnesiumoxid in einer Konzentration von 1 bis 40 Gew.-%, bezogen auf das Gesamtgewicht des Mischoxids, vorliegt.

8. Stickoxid-Speicherkatalysator nach einem oder mehreren der Ansprüche 1 bis 7, **dadurch gekennzeichnet, dass** die obere Beschichtung B Platin und Palladium mit einem Pt:Pd-Verhältnis von 1:1 bis 14:1 enthält.

9. Stickoxid-Speicherkatalysator nach einem oder mehreren der Ansprüche 1 bis 8, **dadurch gekennzeichnet, dass** in der oberen Beschichtung B Platin und Palladium ganz oder teilweise auf dem basisches Magnesium-Aluminium-Mischoxid geträgert vorliegen.

10. Stickoxid-Speicherkatalysator nach einem oder mehreren der Ansprüche 1 bis 9, **dadurch gekennzeichnet, dass** die obere Beschichtung B Ceroxid enthält.

11. Stickoxid-Speicherkatalysator nach einem oder mehreren der Ansprüche 1 bis 10, **dadurch gekennzeichnet, dass**
- eine untere Beschichtung A
∘ Ceroxid in einer Menge von 30 bis 80 g/l,
∘ Platin und Palladium im Verhältnis 2:1, sowie
∘ Rhodium; enthält und
- eine obere Beschichtung B über der unteren Beschichtung A angeordnet ist und
∘ Bariumoxid in einer Menge von 15 bis 35 g/l,
∘ ein basisches Magnesium-Aluminium-Mischoxid mit einem Magnesium-Anteil von 15 bis 25 Gew.-%, bezogen auf das Magnesium-Aluminium-Mischoxid, in einer Menge von 50 bis 150 g/l,
∘ Platin und Palladium im Verhältnis 10:1, sowie
∘ Ceroxid in einer Menge von 50 bis 100 g/l
enthält.

12. Stickoxid-Speicherkatalysator nach einem oder mehreren der Ansprüche 1 bis 10, **dadurch gekennzeichnet, dass**
- eine untere Beschichtung A aus
∘ Ceroxid in einer Menge von 30 bis 80 g/l,
∘ Platin und Palladium im Verhältnis 2:1, sowie
∘ Rhodium; besteht und
- eine obere Beschichtung B über der unteren Beschichtung A angeordnet ist und aus
∘ Bariumoxid in einer Menge von 15 bis 35 g/l,
∘ ein basisches Magnesium-Aluminium-Mischoxid mit einem Magnesium-Anteil von 15 bis 25 Gew.-%, bezogen auf das Magnesium-Aluminium-Mischoxid, in einer Menge von 50 bis 150 g/l,
∘ Platin und Palladium im Verhältnis 10:1, sowie
∘ Ceroxid in einer Menge von 50 bis 100 g/l
besteht.

13. Stickoxid-Speicherkatalysator nach einem oder mehreren der Ansprüche 1 bis 12, **dadurch gekennzeichnet, dass** er eine dritte Beschichtung C umfasst, die zwischen dem Tragkörper und der unteren Beschichtung A angeordnet ist und die eine Erdalkaliverbindung, ein basisches Magnesium-Aluminium-Mischoxid, sowie Platin und Palladium enthält.

14. Verfahren zur Konvertierung von NOₓ in Abgasen von Kraftfahrzeugen, die mit mager betriebenen Motoren, etwa Dieselmotoren, betrieben werden, das **dadurch gekennzeichnet ist, dass** das Abgas über einen Stickoxid-Speicherkatalysator aus mindestens zwei katalytisch aktiven Beschichtungen auf einem Tragköper geleitet wird, wobei
- eine untere Beschichtung A Ceroxid, sowie Platin und/oder Palladium und keine Erdalkaliverbindung enthält und
- eine obere Beschichtung B, die über der Beschichtung A angeordnet ist, eine Erdalkaliverbindung, ein basisches Magnesium-Aluminium-Mischoxid, sowie Platin und Palladium enthält,
wobei sie als Erdalkaliverbindung Bariumoxid oder Strontiumoxid enthält.

## Claims

1. Nitrogen oxide storage catalyst composed of at least two catalytically active coatings on a support body, wherein
- a lower coating A contains cerium oxide, and platinum and/or palladium and no alkaline earth compound, and
- an upper coating B, which is arranged above the coating A, contains an alkaline earth compound, a basic magnesium aluminum mixed oxide, and platinum and palladium,
wherein it contains barium oxide or strontium oxide as alkaline earth compound.

2. Nitrogen oxide storage catalyst according to claim 1, **characterized in that** the lower coating A contains cerium oxide in an amount of 30 to 100 g/l.

3. Nitrogen oxide storage catalyst according to claim 1 and/or 2, **characterized in that** the lower coating A contains platinum and palladium.

4. Nitrogen oxide storage catalyst according to claim 3, **characterized in that** the Pt: Pd ratio in the lower coating A is in the range of 1:2 to 10:1.

5. Nitrogen oxide storage catalyst according to one or more of claims 1 to 4, **characterized in that** the lower coating A contains rhodium.

6. Nitrogen oxide storage catalyst according to one or more of claims 1 to 5, **characterized in that** the upper coating B contains alkaline earth compound in amounts of 10 to 50 g/l.

7. Nitrogen oxide storage catalyst according to one or more of claims 1 to 6, **characterized in that** the upper coating B contains basic magnesium aluminum mixed oxide, wherein magnesium oxide is present in a concentration of 1 to 40% by weight in relation to the total weight of the mixed oxide.

8. Nitrogen oxide storage catalyst according to one or more of claims 1 to 7, **characterized in that** the upper coating B contains platinum and palladium with a Pt: Pd ratio of 1:1 to 14:1.

9. Nitrogen oxide storage catalyst according to one or more of claims 1 to 8, **characterized in that** in the upper coating B, platinum and palladium are present fully or partly supported on the basic magnesium aluminum mixed oxide.

10. Nitrogen oxide storage catalyst according to one or more of claims 1 to 9, **characterized in that** the upper coating B contains cerium oxide.

11. Nitrogen oxide storage catalyst according to one or more of claims 1 to 10, **characterized in that**
- a lower coating A contains
∘ cerium oxide in an amount of 30 to 80 g/l,
∘ platinum and palladium in a ratio of 2:1, and
∘ rhodium; and
- an upper coating B is arranged above the lower coating A and contains
∘ barium oxide in an amount of 15 to 35 g/l,
∘ a basic magnesium aluminum mixed oxide with a magnesium content of 15 to 25% by weight in relation to the magnesium aluminum mixed oxide, in an amount of 50 to 150 g/l,
∘ platinum and palladium in a ratio of 10:1, and
∘ cerium oxide in an amount of 50 to 100 g/l.

12. Nitrogen oxide storage catalyst according to one or more of claims 1 to 10, **characterized in that**
- a lower coating A consists of
∘ cerium oxide in an amount of 30 to 80 g/l,
∘ platinum and palladium in a ratio of 2:1, and
∘ rhodium; and
- an upper coating B is arranged above the lower coating A and consists of
∘ barium oxide in an amount of 15 to 35 g/l,
∘ a basic magnesium aluminum mixed oxide with a magnesium content of 15 to 25% by weight in relation to the magnesium aluminum mixed oxide, in an amount of 50 to 150 g/l,
∘ platinum and palladium in a ratio of 10:1, and
∘ cerium oxide in an amount of 50 to 100 g/l.

13. Nitrogen oxide storage catalyst according to one or more of claims 1 to 12, **characterized in that** it comprises a third coating C, which is arranged between the support body and the lower coating A and contains an alkaline earth compound, a basic magnesium aluminum mixed oxide, and platinum and palladium.

14. Method for converting NOₓ in exhaust gases of motor vehicles that are operated with lean-burn engines, such as diesel engines, **characterized in that** the exhaust gas is guided over a nitrogen oxide storage catalyst composed of at least two catalytically active coatings on a support body, wherein
- a lower coating A contains cerium oxide, and platinum and/or palladium and no alkaline earth compound, and
- an upper coating B, which is arranged above the coating A, contains an alkaline earth compound, a basic magnesium aluminum mixed oxide, and platinum and palladium,
wherein it contains barium oxide or strontium oxide as alkaline earth compound.

## Revendications

1. Catalyseur accumulateur d'oxyde d'azote constitué d'au moins deux revêtements catalytiquement actifs sur un corps de support, dans lequel
- un revêtement A inférieur contient de l'oxyde de cérium, ainsi que du platine et/ou du palladium et aucun composé alcalino-terreux, et
- un revêtement B supérieur, disposé au-dessus du revêtement A, contient un composé alcalino-terreux, un oxyde mixte de magnésium et d'aluminium basique, ainsi que du platine et du palladium,
où ledit revêtement B contient de l'oxyde de baryum ou de l'oxyde de strontium en tant que composé alcalino-terreux.

2. Catalyseur accumulateur d'oxyde d'azote selon la revendication 1, **caractérisé en ce que** le revêtement A inférieur contient de l'oxyde de cérium en une quantité de 30 à 100 g/l.

3. Catalyseur accumulateur d'oxyde d'azote selon la revendication 1 et/ou 2, **caractérisé en ce que** le revêtement A inférieur contient du platine et du palladium.

4. Catalyseur accumulateur d'oxyde d'azote selon la revendication 3, **caractérisé en ce que** le rapport Pt:Pd dans le revêtement A inférieur est compris entre 1:2 et 10:1.

5. Catalyseur accumulateur d'oxyde d'azote selon au moins l'une quelconque des revendications 1 à 4, **caractérisé en ce que** le revêtement A inférieur contient du rhodium.

6. Catalyseur accumulateur d'oxyde d'azote selon au moins l'une quelconque des revendications 1 à 5, **caractérisé en ce que** le revêtement B supérieur contient un composé alcalino-terreux en des quantités de 10 à 50 g/l.

7. Catalyseur accumulateur d'oxyde d'azote selon au moins l'une quelconque des revendications 1 à 6, **caractérisé en ce que** le revêtement B supérieur contient de l'oxyde mixte de magnésium et d'aluminium basique, où l'oxyde de magnésium est présent en une concentration de 1 à 40 % en poids, rapporté au poids total de l'oxyde mixte.

8. Catalyseur accumulateur d'oxyde d'azote selon au moins l'une quelconque des revendications 1 à 7, **caractérisé en ce que** le revêtement B supérieur contient du platine et du palladium avec un rapport Pt:Pd de 1:1 à 14:1.

9. Catalyseur accumulateur d'oxyde d'azote selon au moins l'une quelconque des revendications 1 à 8, **caractérisé en ce que** dans le revêtement B supérieur, du platine et du palladium sont présents supportés entièrement ou partiellement sur l'oxyde mixte de magnésium et d'aluminium basique.

10. Catalyseur accumulateur d'oxyde d'azote selon au moins l'une quelconque des revendications 1 à 9, **caractérisé en ce que** le revêtement B supérieur contient de l'oxyde de cérium.

11. Catalyseur accumulateur d'oxyde d'azote selon au moins l'une quelconque des revendications 1 à 10, **caractérisé en ce que**
- un revêtement A inférieur contient
∘ de l'oxyde de cérium en une quantité de 30 à 80 g/l,
∘ du platine et du palladium dans un rapport de 2:1, ainsi que
∘ du rhodium ; et
- un revêtement B supérieur est disposé sur le revêtement A inférieur et contient
∘ de l'oxyde de baryum en une quantité de 15 à 35 g/l,
∘ un oxyde mixte de magnésium et d'aluminium basique à une teneur en magnésium de 15 à 25 % en poids, rapporté à l'oxyde mixte de magnésium et d'aluminium, en une quantité de 50 à 150 g/l,
∘ du platine et du palladium dans un rapport de 10:1, ainsi que
∘ de l'oxyde de cérium en une quantité de 50 à 100 g/l.

12. Catalyseur accumulateur d'oxyde d'azote selon au moins l'une quelconque des revendications 1 à 10, **caractérisé en ce que**
- un revêtement A inférieur est constitué
∘ d'oxyde de cérium en une quantité de 30 à 80 g/l,
∘ de platine et de palladium dans un rapport de 2:1, ainsi que
∘ de rhodium ; et
- un revêtement B supérieur est disposé sur le revêtement A inférieur et est constitué
∘ d'oxyde de baryum en une quantité de 15 à 35 g/l,
∘ d'un oxyde mixte de magnésium et d'aluminium basique à une teneur en magnésium de 15 à 25 % en poids, rapporté à l'oxyde mixte de magnésium et d'aluminium, en une quantité de 50 à 150 g/l,
∘ de platine et de palladium dans un rapport de 10:1, ainsi que
∘ d'oxyde de cérium en une quantité de 50 à 100 g/l.

13. Catalyseur accumulateur d'oxyde d'azote selon au moins l'une quelconque des revendications 1 à 12, **caractérisé en ce qu'il** comprend un troisième revêtement C, lequel est disposé entre le corps de support et le revêtement A inférieur et lequel contient un composé alcalino-terreux, un oxyde mixte de magnésium et d'aluminium basique, ainsi que du platine et du palladium.

14. Procédé de conversion de NOₓ dans des gaz d'échappement des véhicules automobiles, lesquels fonctionnent avec des moteurs à mélange pauvre, tels que des moteurs diesel, lequel est **caractérisé en ce que** les gaz d'échappement sont dirigés à travers un catalyseur accumulateur d'oxyde d'azote constitué d'au moins deux revêtements catalytiquement actifs sur un corps de support, dans lequel
- un revêtement A inférieur contient de l'oxyde de cérium, ainsi que du platine et/ou du palladium et aucun composé alcalino-terreux, et
- un revêtement B supérieur, disposé au-dessus du revêtement A, contient un composé alcalino-terreux, un oxyde mixte de magnésium et d'aluminium basique, ainsi que du platine et du palladium,
où ledit revêtement B contient de l'oxyde de baryum ou de l'oxyde de strontium en tant que composé alcalino-terreux.
